# FASCICULE DE BREVET EUROPEEN

(11) **EP 0 387 345 B1**
(45) Date de publication et mention de la délivrance du brevet: **06.04.1994**
(21) Numéro de dépôt: 89911256.9
(22) Date de dépôt: 25.09.1989
(51) Int. Cl.: B62D 61/08, B62D 63/06, B62D 31/00

(54) **VEHICULE AUTOMOBILE URBAIN TRACTEUR D'UNE REMORQUE DE LIVRAISON**
STADTAUTOMOBIL MIT LIEFERANHÄNGER
URBAN MOTOR VEHICLE FOR TOWING A DELIVERY TRAILER

(30) Priorité: 23.09.1988 FR 8812428
(43) Date de publication de la demande: 19.09.1990
(73) Titulaire: LE BIHAN, Louis, F-75005 Paris (FR)
(72) Inventeur: LE BIHAN, Louis, F-75005 Paris (FR); FRITSCH, Antoine, F-75013 Paris (FR)
(74) Mandataire: Bruder, Michel
(86) Numéro de dépôt international: FR8900487
(87) Numéro de publication internationale: WO9003299

(56) Documents cités:
- BE-A- 662 887
- CH-A- 426 510
- FR-A- 1 506 602
- FR-A- 2 398 655

## Description

La présente invention concerne un véhicule automobile comportant une remorque de livraison.

L'invention se rapporte ainsi au problème, très général, de la livraison par véhicule automobile, notamment en milieu urbain, d'objets de volume et de poids, variés (paquets, colis, courrier) à destination d'acheteurs ou d'utilisateurs divers.

Le problème de la livraison en milieu urbain est lié, pour une grande part, à cette diversité de forme et de poids des objets à livrer, ainsi que bien entendu à la circulation, au stationnement et au chargement des véhicules de livraison.

Diverses solutions ont été proposées pour les véhicules de livraison, qui sont généralement des compromis entre deux nécessités contradictoires, à savoir celle liée au transport des objets volumineux qui impose un véhicule encombrant et celle liée à la facilité de circulation, notamment en milieu urbain, qui réclame des véhicules d'autant plus maniables que leurs dimensions sont plus réduites. Des véhicules selon le préambule de la revendication 1, dont la partie arrière pourvait être attelable à une partie tractée, sont connus par exemple du BE-A-662 887, FR-A-1 506 602 ou FR-A-2 398 655.

La présente invention a pour but un type nouveau de véhicule automobile permettant d'assurer le transport de colis volumineux et qui est à la fois particulièrement maniable, et facile à charger.

La présente invention a ainsi pour objet un véhicule automobile comportant une partie avant tractice munie d'un habitacle, dont au moins la partie arrière est sensiblement de révolution, et attelable à une partie tractée, caractérisé en ce que la partie arrière inférieure de cet habitacle comporte un espace communiquant librement avec l'extérieur, dans lequel sont logés, d'une part au moins une roue arrière, coplanaire avec le plan de symétrie vertical avant-arrière du véhicule et, d'autre part, un organe d'attelage articulé sur la partie tractée, situé à proximité de l'axe sensiblement vertical de l'habitacle.

Une telle disposition permet ainsi de disposer d'un véhicule comportant une remorque de longueur minimale, puisque le point d'attelage est déplacé le plus près possible, et au-dessous de l'habitacle de la partie tractrice du véhicule et que ainsi la partie frontale avant de la remorque, ou partie tractée, peut être située à proximité de la partie arrière de l'habitacle.

D'autre part la situation du point d'attelage, la forme de l'habitacle et la position médiane de la (ou des) roues arrière permettent, d'orienter la partie tractrice du véhicule par rapport à sa remorque avec un angle peu important ce qui procure au véhicule un rayon de braquage minimal.

De plus, dans un mode de réalisation préférentiel, où le timon de la remorque est fixé sous la partie tractrice du véhicule, on rend plus facile la réalisation de remorques dont le plateau de chargement se situe à un niveau peu élevé par rapport au sol, ce qui est de nature à faciliter l'opération de chargement.

La présente invention permet également d'appliquer, la force transmise par le timon de la remorque à proximité de l'axe de l'habitacle ce qui améliore la stabilité du véhicule et son adhérence.

Enfin, en raison d'une part de la forme sensiblement de révolution de la partie arrière de l'habitacle, et de la position coplanaire de la (ou des) roue arrière avec le plan de symétrie vertical avant-arrière du véhicule, il est possible, en prévoyant une échancrure dans la partie basse arrière des portes, de faire coulisser celles-ci vers l'arrière pour les faire passer d'une position de fermeture à une position d'ouverture. Une telle disposition est en mesure d'accroître considérablement la facilité d'utilisation du véhicule, d'autant que la présente disposition peut être mise en oeuvre sur des portes de véhicules dont la partie inférieure descend suffisamment bas pour favoriser au maximum leur accès.

Dans une variante particulièrement intéressante de la présente invention l'échancrure prévue dans la partie basse arrière des portes est telle qu'elle se confond avec la paroi inférieure arrière de l'habitacle, adjacente à l'espace communiquant librement avec l'extérieur.

On décrira ci-après, à titre d'exemples non limitatifs, deux formes d'exécution de la présente invention, en référence au dessin annexé sur lequel :
Les figures 1 et 2 sont des vues respectivement en élévation et en plan d'un mode de réalisation de l'invention, représentée de façon schématique.
Les figures 3 et 4 sont des vues respectivement en élévation et en plan d'une variante de réalisation de l'invention, représentée de façon schématique.

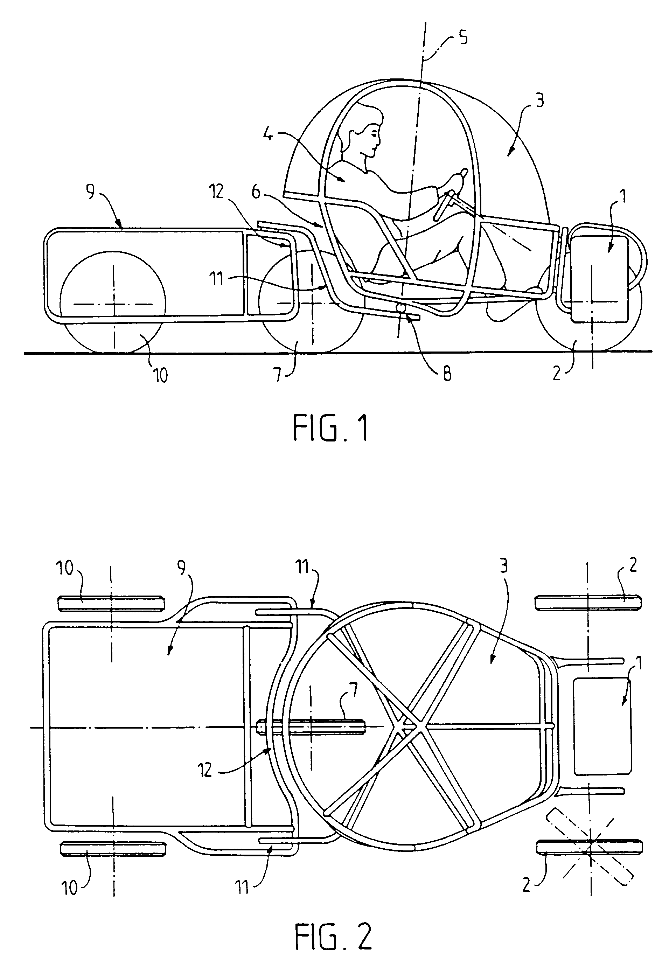

Sur les figures 1 et 2 la partie tractrice du véhicule suivant l'invention est constituée pour l'essentiel par sa partie centrale formant un habitacle 3 et comporte un bloc moteur 1 et deux roues avant motrices 2. L'habitacle 3 est de forme sensiblement de révolution, ici sensiblement sphérique, autour d'un axe 5 sensiblement vertical, et est percé d'un passage 4 donnant accès à l'intérieur de l'habitacle 3.

La partie arrière inférieure de l'habitacle 3 laisse subsister un espace 6 communiquant librement avec l'environnement extérieur. Dans cet espace est logé d'une part une roue arrière 7, coplanaire avec le plan de symétrie vertical avant-arrière du véhicule, et, d'autre part un organe d'attelage articulé 8 d'une partie tractée, ou remorque 9, situé sur l'axe 5 et disposé sous l'habitacle 3. Bien entendu l'organe d'attelage 8 peut être disposé, ainsi que mentionné plus loin, non plus exactement sur l'axe 5, mais à proximité de celui-ci.

Dans ce mode de réalisation, la remorque 9 a deux roues arrières 10, et est la plus surbaissée possible, grâce à un timon d'attelage 11.

Le timon d'attelage est constitué de deux bras 11a fixés sur chacune des faces latérales de la remorque 9, qui convergent de chaque côté de la roue 7, vers l'organe d'attelage central articulé 8.

La partie frontale 12 de la remorque 9 est de forme circulaire, avec sa concavité orientée vers l'intérieur de la remorque, de sorte que la partie tractrice du véhicule et la remorque 9 peuvent s'articuler angulairement avec un rayon de braquage minimal. La position médiane de la roue arrière 7 de la partie tractrice du véhicule permet d'obtenir des angles, entre l'axe longitudinal de la remorque et l'axe longitudinal de la partie tractrice du véhicule, de valeur relativement réduite.

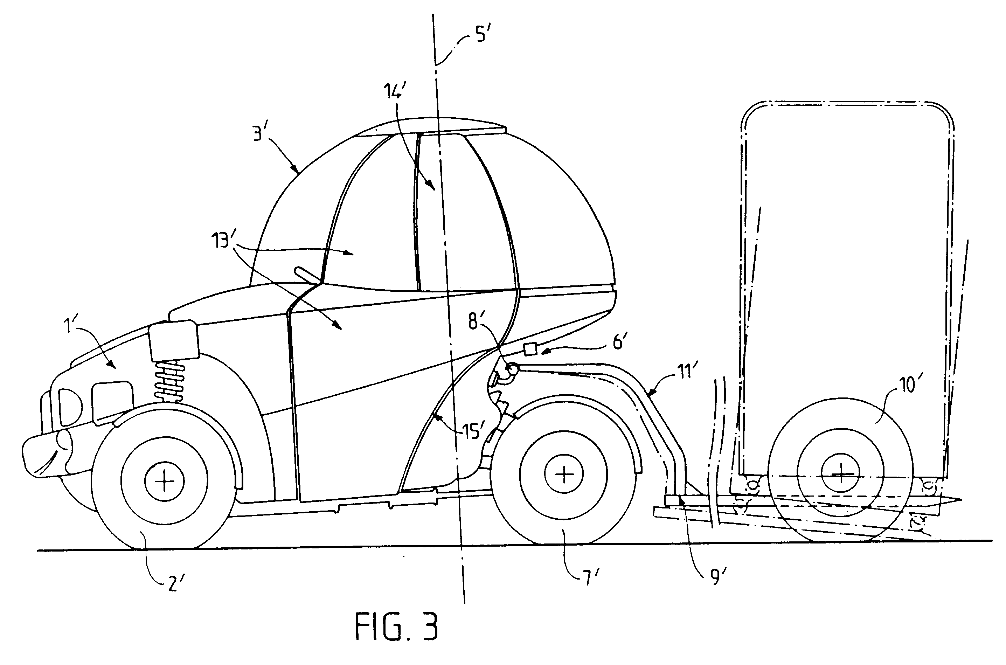

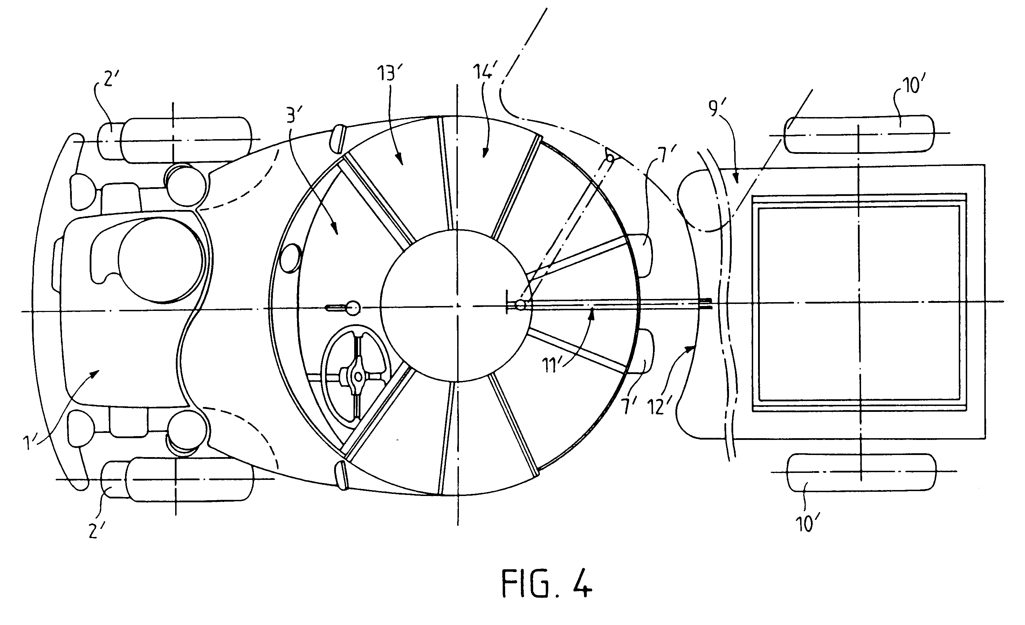

Les figures 3 et 4 représentent schématiquement une variante d'une réalisation de l'invention. Sur ces figures les mêmes numéros de référence que ceux portés sur les figures 1 et 2 sont, conservés pour des éléments analogues et affectés de l'indice '. Sur ces figures, on notera que, pour des raisons de contraintes techniques l'organe d'attelage articulé 8 est situé, non plus exactement sur l'axe 5', mais à proximité de celui-ci. Il n'y a plus dès lors exactement concentricité des mouvements circulaires de l'habitacle et de la remorque, mais seulement quasi-concentricité ce qui permet néanmoins d'obtenir un angle minimal entre l'axe longitudinal de la partie tractrice du véhicule et celui de la remorque, suffisant en pratique pour conférer à l'ensemble un très faible rayon de braquage.

Bien que l'on ait représenté une face frontale avant de la remorque de forme circulaire, de même rayon que la partie sphérique de l'habitacle, on pourra en pratique avoir une face frontale plane sans perdre les avantages ci-dessus.

Dans cet exemple, on a prévu deux roues arrière 7, pour des raisons de transmission de charge au sol, mais ces roues sont néanmoins rapprochées du plan médian vertical de symétrie avant-arrière du véhicule.

Enfin, on voit que les portes 13' et fenêtres 14' ont également la même forme sphérique que celle du reste de l'habitacle, de façon à pivoter autour de l'axe 5' de l'habitacle afin de permettre leur ouverture et leur fermeture sans modifier l'emprise au sol du véhicule. La position médiane des roues arrières 7' et la partie inférieure échancrée 15' des portes permettent la libre rotation de celles-ci vers l'arrière du véhicule, lors de leur ouverture.

On observera que la partie tractrice du véhicule peut éventuellememt être utilisée seule sans être attelée à une remorque.

## Revendications

1. Véhicule automobile comportant une partie avant tractrice pourvue d'un habitacle (3,3') dont au moins une partie arrière est de forme sensiblement de révolution, autour d'un axe (5,5') sensiblement vertical, cette partie arrière étant attelable à une partie tractée (9,9'), caractérisé en ce que la partie arrière inférieure de cet habitacle (3,3') comporte un espace (6,6') communiquant librement avec l'extérieur, dans lequel sont logés d'une part au moins une roue arrière (7,7') coplanaire avec le plan de symétrie vertical avant-arrière du véhicule et, d'autre part, un organe d'attelage articulé (8,8') sur la partie tractée (9,9'), situé à proximité de l'axe (5,5') sensiblement vertical de l'habitacle (3,3').

2. Véhicule automobile suivant la revendication 1 caractérisé en ce que la partie tractrice du véhicule comporte une roue arrière (7,7') coplanaire avec le plan de symétrie vertical avant et arrière du véhicule.

3. Véhicule automobile suivant la revendication 1 caractérisé en ce que l'organe d'attelage articulé (8,8') est disposé entre l'axe vertical (5,5') et une verticale passant par l'axe de rotation de la roue arrière (7,7').

4. Véhicule automobile suivant la revendication 1 caractérisé en ce que sa partie tractrice comporte au moins une porte (13,13') montée coulissante, entre deux positions, à savoir une position de fermeture, et une position d'ouverture située en arrière de la position de fermeture, la partie inférieure arrière de la porte (13,13') étant échancrée sur une hauteur s'étendant de la base de l'habitacle (3,3') jusqu'à au moins la hauteur de l'organe d'attelage articulé (8,8').

5. Véhicule automobile suivant la revendication 4 caractérisé en ce que l'échancrure de la porte (13,13') est située, lorsque celle-ci est fermée, dans le prolongement de la face arrière de l'habitacle, adjacente à l'espace (6,6') prévu à l'arrière de la partie tractrice du véhicule et communiquant avec l'extérieur.

6. Véhicule automobile suivant la revendication 5 caractérisé en ce que la partie inférieure de la porte (13,13') se situe à un niveau au moins aussi bas que celui d'une ligne droite joignant l'axe des moyeux des roues avant (2,2') et arrière (7,7') de la partie tractrice du véhicule.

## Claims

1. Automobile vehicle comprising a front towing part provided with a body (3, 3') of which at least a rear part is substantially of form of revolution, about a substantially vertical axis (5, 5'), this rear part being adapted to be coupled to a towed part (9, 9'), characterized in that the lower rear part of this body (3, 3') comprises a space (6, 6') communicating freely with the outside, in which are housed, on the one hand, at least one rear wheel (7, 7') coplanar with the vertical front/rear plane of symmetry of the vehicle and, on the other hand, a coupling member (8, 8') articulated on the towed part (9, 9'), located in the proximity of the substantially vertical axis (5, 5') of the body (3, 3').

2. Automobile vehicle according to Claim 1, characterized in that the towing part of the vehicle comprises a rear wheel (7, 7') coplanar with the vertical front/rear plane of symmetry of the vehicle.

3. Automobile vehicle according to Claim 1, characterized in that the articulated coupling member (8, 8') is disposed between the vertical axis (5, 5') and a vertical line passing through the axis of rotation of the rear wheel (7, 7').

4. Automobile vehicle according to Claim 1, characterized in that its towing part comprises at least one door (13, 13') mounted to slide between two positions, namely a position of closure and a position of opening located to the rear of the position of closure, the rear lower part of the door (13, 13') being notched over a height extending from the base of the body (3, 3') up to at least the height of the articulated coupling member (8, 8').

5. Automobile vehicle according to Claim 4, characterized in that the notch of the door (13, 13') is located, when the latter is closed, in the extension of the rear face of the body, adjacent the space (6, 6') provided to the rear of the towing part of the vehicle and communicating with the outside.

6. Automobile vehicle according to Claim 5, characterized in that the lower part of the door (13, 13') is located at a level at least as low as that of a straight line joining the axis of the hubs of the front (2, 2') and rear (7, 7') wheels of the towing part of the vehicle.

## Patentansprüche

1. Frontgetriebenes Kraftfahrzeug mit einem ein Führerhaus (3, 3') enthaltenden Zugteil, von dem mindestens ein rückwärtiger Teil eine um eine etwa vertikale Achse (5, 5') in etwa runde Form hat, wobei dieser rückwärtige Teil an einen gezogenen Teil (9, 9') angekuppelt werden kann, **dadurch gekennzeichnet**, daß der hintere Teil des Führerhauses (3, 3') einen nach außen offenen Raum (6, 6') aufweist, in dem zum einen mindestens ein in der vertikalen Längs-Symmetrieebene des Fahrzeugs liegendes Hinterrad (7, 7') und zum anderen eine nahe bei der in etwa vertikalen Achse (5, 5') des Führerhauses (3, 3') angeordnete, mit dem gezogenen Teil (9, 9') gelenkig verbundene Kupplung (8, 8') untergebracht sind.

2. Kraftfahrzeug nach Anspruch 1, **dadurch gekennzeichnet**, daß an dem Zugteil des Fahrzeugs ein in der vertikalen Längs-Symmetrieebene des Fahrzeugs liegendes Hinterrad (7, 7') aufgehängt ist.

3. Kraftfahrzeug nach Anspruch 1, **dadurch gekennzeichnet**, daß die gelenkige Kupplung (8, 8') zwischen der Vertikalachse (5, 5') und einer durch die Drehachse des Hinterrades (7, 7') führenden Vertikalen angeordnet ist.

4. Kraftfahrzeug nach Anspruch 1, **dadurch gekennzeichnet**, daß sein Zugteil mindestens eine Schiebetür (13, 13') aufweist, die zwischen zwei Positionen, nämlich einer Schließposition und einer hinter dieser liegenden Öffnungsposition hin- und hergleiten kann, wobei der untere hintere Teil der Tür (13, 13') über eine Höhe bogenförmig ausgeschnitten ist, welche vom Boden des Führerhauses (3, 3') bis mindestens zur Höhe der schwenkbaren Kupplung (8, 8') reicht.

5. Kraftfahrzeug nach Anspruch 4, **dadurch gekennzeichnet**, daß der bogenförmige Ausschnitt der Tür (13, 13') in deren geschlossenem Zustand in der Verlängerung der Hinterseite des Führerhauses liegt, welche an den hinten im Zugteil des Fahrzeugs befindlichen und nach außen offenen Raum (6, 6') angrenzt.

6. Kraftfahrzeug nach Anspruch 5, **dadurch gekennzeichnet**, daß sich der untere Teil der Tür (13, 13') auf einer Höhe befindet, die mindestens so niedrig liegt, wie eine die Achse der Naben der Vorder- und Hinterräder (2, 2'; 7, 7') des Zugsteils des Fahrzeugs verbindende Gerade.
